# EUROPÄISCHE PATENTSCHRIFT

(11) **EP 2 321 138 B1**
(45) Veröffentlichungstag und Bekanntmachung des Hinweises auf die Patenterteilung: **25.07.2012**
(21) Anmeldenummer: 09775580.5
(22) Anmeldetag: 03.08.2009
(51) Int. Cl.: B60K 15/03, B60K 13/04

(54) **VERFAHREN ZUR HERSTELLUNG EINES MEHRKAMMERTANKS**
METHOD FOR PRODUCING A MULTI-CHAMBER TANK
PROCEDE DE PRODUCTION D'UN RESERVOIR A PLUSIEURS COMPARTIMENTS

(30) Priorität: 03.09.2008 AT 4742008 U
(43) Veröffentlichungstag der Anmeldung: 18.05.2011
(73) Patentinhaber: Alutech Gesellschaft m.b.H., 5651 Lend (AT)
(72) Erfinder: FLETCHER, Paul, A-5620 Schwarzach (AT); FELDNER, Otto, A-5760 Saalfelden (AT); WASLE, Gregor, A-6600 Reutte (AT)
(74) Vertreter: Weiser, Andreas
(86) Internationale Anmeldenummer: PCT/AT2009/000295
(87) Internationale Veröffentlichungsnummer: WO 2010/025481

(56) Entgegenhaltungen:
- EP-A1- 1 350 654
- WO-A1-2007/080078

## Beschreibung

Die vorliegende Erfindung betrifft ein Verfahren zur Herstellung eines Mehrkammertanks für Betriebsmittel von Kraftfahrzeugen, der mindestens eine innenbeschichtete erste und mindestens eine innenbeschichtungslose zweite Kammer hat, mit den Schritten:
Zurverfügungstellen eines ersten Tanksegments aus Metall, welches die erste Kammer enthält und einen außenseitig vorstehenden Umfangskragen aufweist,
Rotolining des ersten Tanksegments zwecks Innenbeschichtens der ersten Kammer mit Kunststoff, und
Verbinden eines zweiten Tanksegments aus Metall mit dem Umfangskragen, um zwischen dem zweitem Tanksegment, dem Umfangskragen und der Außenseite des ersten Tanksegments die zweite Kammer zu bilden.

Innenseitig kunststoffbeschichtete Metalltanks werden insbesondere für aggressive Betriebsmittel von Kraftfahrzeugen benötigt, beispielsweise Harnstofflösungen wie AdBlue^{®}, die als Katalysatorflüssigkeiten zur Abgasreinigung von Dieselmotoren Verwendung finden. Die Kunststoffbeschichtung wird in der Regel durch Rotolining im Inneren ("in situ") des Tanks gebildet. Dazu wird Kunststoffgranulat über eine Öffnung in den Tank eingebracht, die Öffnung verschlossen und der Tank unter Erhitzung gedreht, bis der Kunststoff auf der Innenseite der Metallwandung gleichmäßig aufschmilzt und dort eine Kunststoffbeschichtung bildet. Die Öffnung wird anschließend wieder freigelegt.

Mehrkammertanks mit getrennten Kammern für verschiedene Betriebsstoffe, z.B. Kraftstoff einerseits und Katalysatorflüssigkeit anderseits, sind aus der EP 1 350 654 A1 bekannt.

Die WO 2007/080078, welche der nächstliegenden Stand der Technik bildet, beschreibt ein Verfahren der einleitend genannten Art zur Herstellung eines Mehrkammertanks mit einer innenbeschichteten Kammer für Katalysatorflüssigkeit und einer innenbeschichtungslosen Kammer für Kraftstoff. Der Tank ist segmentiert, und nur jenes Tanksegment, welches die zu beschichtende Kammer enthält, wird' in die Rotolining-Maschine eingespannt, um deren Platz bestmöglich auszunützen. Anschließend wird das erste Tanksegment mit der innenbeschichteten Kammer entnommen und an einem Umfangskraqen mit dem zweiten Tanksegment stumpf verschweißt.

Bei dem Verfahren der WO 2007/080078 wird das erste Tanksegment in der Rotolining-Maschine mittels Spannbändern gehalten. Die über die Außenoberfläche des ersten Tanksegments verlaufenden Spannbänder können Kratzer oder Druckstellen erzeugen, was die Oberflächenqualität des Endprodukts empfindlich beeinträchtigt. Darüber hinaus stören die Spannbänder die Wärmeübertragung in der Rotolining-Maschine, was zu einer ungleichmäßigen Wärmeverteilung auf der Innenseite der Kammer, damit zu einem ungleichmäßigen Aufschmelzen der Kunststoffbeschichtung und in der Folge einer ungleichmäßigen Schichtdicke der Kunststoffbeschichtung führt.

Die Erfindung setzt sich zum Ziel, die geschilderten Nachteile des Standes der Technik zu überwinden und ein Verfahren zur Herstellung eines Mehrkammertanks mit zumindest einer innenbeschichteten Kammer zu schaffen, welches eine ausgezeichnete Beschichtungs- und Oberflächenqualität des Endprodukts gewährleistet.

Dieses Ziel wird mit einem Verfahren der eingangs genannten Art erreicht, das sich gemäß der Erfindung dadurch auszeichnet, daß das erste Tanksegment während des Rotolinings an seinem Umfangskragen gehalten wird.

Dadurch bleibt jener Bereich des ersten Tanksegments, welcher innen zu beschichten ist, frei von Wärmebrücken oder -abschattungen während des Rotolinings, sodaß eine gleichmäßige Wanderwärmung und damit gleichmäßige Innenbeschichtung der ersten Kammer erzielt werden kann.

Gemäß einer besonders bevorzugten Ausführungsform der Erfindung wird das erste Tanksegment während des Rotolinings an einer Stelle des Umfangskragens gehalten, welche beim anschließenden Verbinden vom zweiten Tanksegment überdeckt wird. Dadurch wird ein Zerkratzen oder Eindellen der nach dem Zusammenbau freiliegenden Außenseitenbereiche des Tanks verhindert, wodurch ein makelloses Endprodukt erreicht werden kann.

Besonders bevorzugt ist die genannte Stelle ein Schweißfalz des Umfangskragens, wie er z.B. aus der EP 1 350 654 A1 an sich bekannt ist und eine bündige Außenoberfläche des Endprodukts nach dem Zusammensetzen der Segmente gewährleistet.

Besonders vorteilhaft ist es, wenn der Schweißfalz vom umgebogenen Rand einer Trennwand gebildet wird, welche die erste Kammer in Richtung zur zweiten Kammer abschließt, was eine einfache Fertigung mit minimaler Teilezahl ermöglicht.

Eine weitere bevorzugte Ausführungsform der Erfindung zeichnet sich durch die weiteren Schritte des Auftragens einer Schutzschicht auf die Außenseite des ersten Tanksegments vor dem Rotolining und des Entfernens der Schutzschicht nach dem Rotolining aus. Dadurch kann die Außenseite vor unbeabsichtigten Berührungen während des Rotolinings geschützt und ein makelloses Endprodukt erreicht werden.

Bevorzugt kann das erste Tanksegment während des Rotolinings zusätzlich auf seiner Außenseite abgestützt werden, besonders bevorzugt punktuell oder großflächig-elastisch, wenn höhere Kräfte aufzunehmen sind. Die optionale Schutzschicht kann auch jedwede unbeabsichtigte Kontaktierung der Außenoberfläche verhindern; die punktuelle Abstützung minimiert aufgrund ihrer geringen Kontaktfläche die Gefahr einer Störung der Oberflächentemperaturverteilung.

Die Erfindung wird nachstehend anhand eines in den beigeschlossenen Zeichnungen dargestellten Ausführungsbeispieles näher erläutert. In den Zeichnungen zeigt:
Fig. 1 einen nach dem Verfahren der Erfindung hergestellten Mehrkammertank im Längsschnitt;
Fig. 2 ein erstes und ein zweites Tanksegment zur Herstellung des Mehrkammertanks von Fig. 1 ausschnittsweise im Schnitt;
Fig. 3 eine Rotolining-Maschine in einer schematischen Perspektivansicht zur Veranschaulichung des Rotolining-Schritts der Erfindung;
Fig. 4 das erfindungsgemäße Einspannen des ersten Tanksegments während des Rotolinings anhand eines Schnitts durch einen der Spannbacken der Rotolining-Maschine von Fig. 3; und
Fig. 5 den Schritt des Verbindens der Tanksegmente nach dem Rotolining-Schritt.

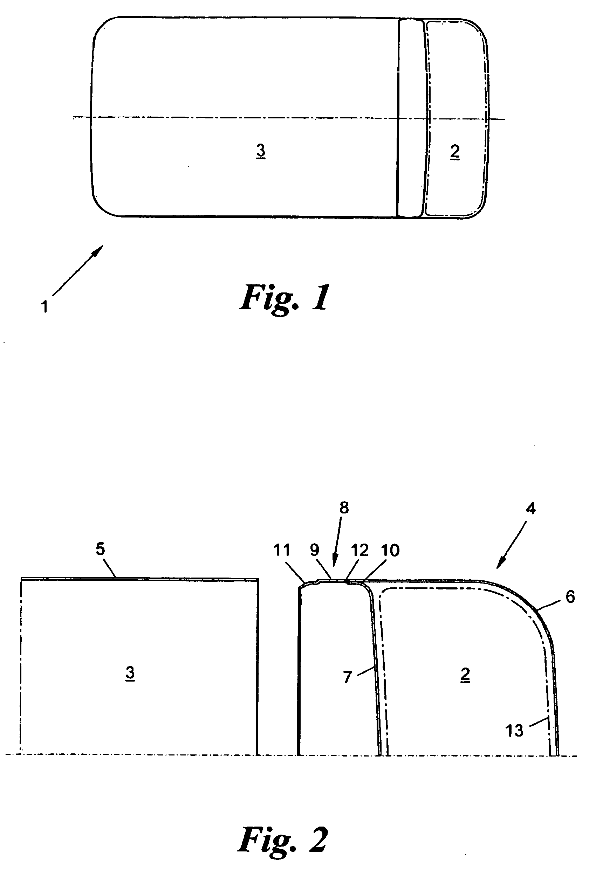

Fig. 1 zeigt einen Mehrkammertank 1 mit einer ersten Kammer 2 und einer zweiten Kammer 3. Der Mehrkammertank 1 kann auch mehr als zwei Kammern 2, 3 enthalten und/oder mit Einbauten wie Schwallwänden, Meßwertgebern, Entnahmeleitungen, Einfüllstutzen usw. ausgestattet sein (nicht gezeigt), wie dem Fachmann bekannt. Der Mehrkammertank 1 ist aus Metall gefertigt, bevorzugt Aluminium.

Wie in Fig. 2 gezeigt, wird der Mehrkammertank 1 aus mehreren Segmenten zusammengesetzt, u.zw. im gezeigten Beispiel aus einem ersten Tanksegment 4, das die erste Kammer 2 enthält, und einem zweiten Tanksegment 5, welches gemeinsam mit dem ersten Tanksegment die zweite Kammer 3 bildet. Sowohl das erste als auch das zweite Tanksegment 4, 5 können ihrerseits aus weiteren Segmenten zusammengesetzt sein und/oder weitere Kammern enthalten (nicht gezeigt).

Das erste Tanksegment 4 ist aus einem kalottenförmigen Tiefziehteil 6 gefertigt, welcher durch eine Trennwand 7 verschlossen ist, um die erste Kammer 2 zu bilden. Die Trennwand 7 hat einen umgebogenen Rand mit einem mittigen Wulst 9 und zwei beidseits anschließenden Schweißfalzen 10, 11. Der Umfangsrand des Tiefziehteils 6 übergreift den ersten Schweißfalz 10 und wird bei 12 außenbündig mit der Flanke des Wulstes 9 verschweißt. Vor dem Zusammenfügen der beiden Tanksegmente 4, 5 bildet somit der umgebogene Rand der Trennwand 7 einen von der ersten Kammer 2 nach außen (in der Fig. 2 nach links) vorstehenden Umfangskragen 8 zur Verbindung mit dem zweiten Tanksegment 5.

Das zweite Tanksegment 5 ist ebenfalls ein kalottenförmiger Tiefziehteil und bildet nach dem Verbinden zwischen sich, dem Umfangskragen 8 und der durch die Trennwand 7 gebildeten Außenseite des ersten Tanksegments 4 die zweite Kammer 3.

Zumindest eine der Kammern des Mehrkammertanks 1, im gezeigten Beispiel die Kammer 2 des ersten Tanksegments 4, wird mittels Rotolinings mit einer innenseitigen Kunststoffbeschichtung 13 versehen, wogegen mindestens eine der übrigen Kammern, hier die Kammer 3 des zweiten Tanksegments 5, beschichtungslos bleibt.

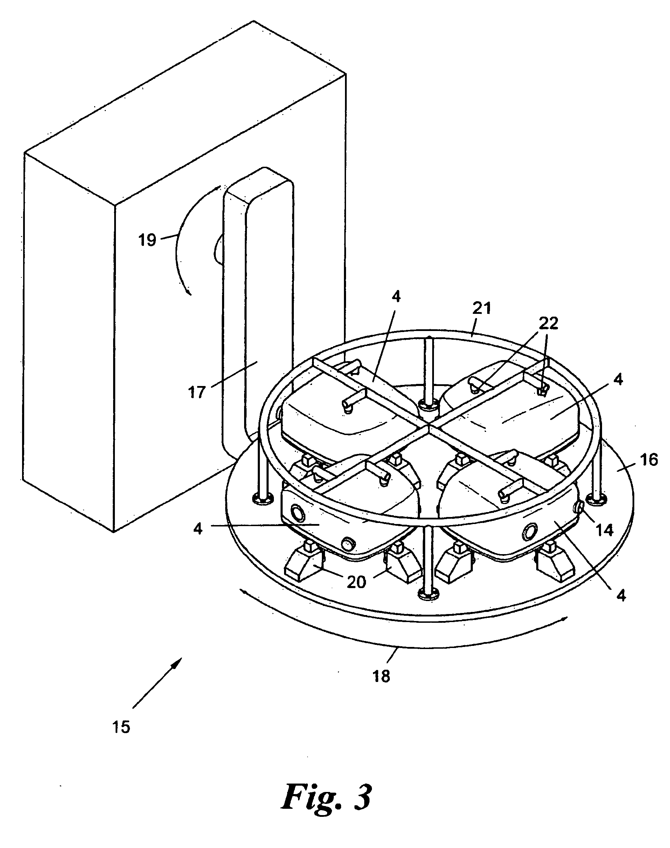

Wie dem Fachmann bekannt, ist Rotolining ein Verfahren, das zur Kunststoffauskleidung von Hohlkörpern entwickelt wurde. Die Kunststoffbeschichtung 13 wird dabei "in situ" durch Verwendung der Metallwandung der ersten Kammer 2 als Form gefertigt. Kunststoffmaterial wird in z.B. granularer Form über eine Öffnung, wie einen Einfüllstutzen 14 (Fig. 3), in die Kammer 2 des Tanksegments 4 eingebracht, dann wird die Öffnung verschlossen und das Tanksegment 4 wird unter Erhitzung allseitig gedreht, bis das Granulat als Kunststoffbeschichtung 13 auf der Innenseite der Metallwandung der Kammer 2 aufschmilzt.

Die Kunststoffbeschichtung 13 ist bevorzugt resistent gegenüber dem aufzunehmenden Betriebsmittel, hier Harnstofflösung. Geeignete Kunststoffe für die Kunststoffbeschichtung sind beispielsweise Polyolefine wie HDPE (high density polyethylene), MDPE (medium density polyethylene), LDPE (low density polyethelene) oder LLDPE (linear low density polyethylene).

Fig. 3 zeigt eine Rotolining-Maschine 15 zur Durchführung des Rotolining-Schrittes. Die Rotolining-Maschine 15 umfaßt einen Drehteller 16, der am Ende eines Arms 17 in Richtung des Pfeiles 18 rotiert, während der Arm 17 seinerseits an einem Gestell um eine dazu normale Drehachse in Richtung des Pfeiles 19 rotiert.

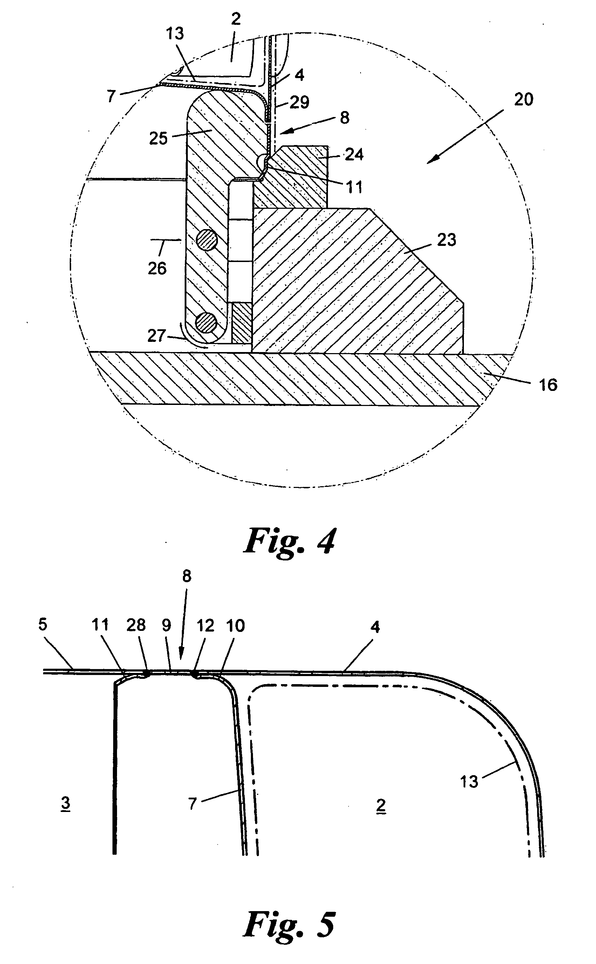

Auf dem Drehteller 16 sind im gezeigten Beispiel vier erste Tanksegmente 4 mittels jeweils vier Klemmbacken 20 gehalten, welche anhand von Fig. 4 noch ausführlicher beschrieben werden; selbstverständlich sind auch andere Anordnungen und Anzahlen möglich. Ein optionales Stützgerüst 21 kann die Tanksegmente 4 zusätzlich an ihrer Oberseite mittels optionaler Auflager 22 abstützen. Die Auflager 22 können beispielsweise spitze Nadeln sein, die eine punktuelle Abstützung bewirken, oder alternativ großflächige, weiche elastische Polster (nicht gezeigt).

Durch Antreiben des Drehtellers 16 in Richtung der Pfeile 18 und 19 ergibt sich eine Taumelbewegung der Tanksegmente 4, welche zu einer gleichmäßigen Verteilung des darin eingebrachten Kunststoffgranulats über die gesamte Innenseite der Kammern 2 führt. Mittels einer (nicht dargestellten) Heizeinrichtung werden die Metallwände der Tanksegmente 4 erhitzt, um das Kunststoffgranulat als Kunststoffbeschichtung 13 auf die Innenseiten der Kammern 2 aufzuschmelzen.

Fig. 4 zeigt einen der Klemmbacken 20 des Drehtellers 16 und den Schritt des Haltens der Tanksegmente 4 während des Rotolinings im Detail. Jeder Klemmbacken 20 umfaßt einen am Drehteller 16 befestigten starren Klemmschuh 23 mit einem Auflager 24 und einen dazu relativbeweglichen Klemmhebel 25. Der Klemmhebel 25 ist in Richtung der Pfeile 26, 27 gegenüber dem Auflager 24 beweglich.

Zwischen Auflager 24 und Klemmhebel 25 wird der Umfangskragen 8 des ersten Tanksegments 4 eingespannt, und zwar genau im Bereich jenes zweiten Schweißfalzes 11, der beim anschließenden Verbinden des zweiten Tanksegments 5 von diesem übergriffen und abgedeckt wird. Die Einspannstellen des ersten Tanksegments 4 sind damit am fertigen Mehrkammertank 1 nicht mehr sichtbar.

Darüber hinaus vermeidet das Einspannen des ersten Tanksegments 4 an seinem von der Kammer 2 abstehenden Umfangskragen 8 eine Beeinträchtigung der Wärmeverteilung über die Oberfläche der Wandung der Kammer 2, sodaß die Kunststoffbeschichtung 13 mit gleichmäßiger Wandstärke auf der Innenseite der Kammer 2 aufschmilzt.

Fig. 5 zeigt den finalen Schritt des Verbindens des zweiten Tanksegments 5 mit dem ersten Tanksegment 4 nach dem Rotolining. Das zweite Tanksegment 5 wird auf den zweiten Schweißfalz 11 aufgeschoben und bei 28 außenbündig mit dem Wulst 9 des Umfangskragens 8 des ersten Tanksegments 4 verschweißt.

Vor dem Einspannen des ersten Tanksegments 4 in die Rotolining-Maschine (Fig. 3) kann in einem optionalen Schritt eine Schutzschicht 29 (Fig. 4) auf die Außenseite des ersten Tanksegments 4 aufgebracht werden, welche nach dem Rotolining entfernt oder aber auch auf dem Endprodukt belassen wird. Die Schutzschicht 29 kann beispielsweise aus Silikon, Teflon, Lack oder einer handelsüblichen Oberflächenbehandlung der.Außenseite des ersten Tanksegments 4 bestehen. Falls gewünscht, kann dieselbe Art von Schutzschicht 29 auch auf die Außenseite des zweiten Tanksegments 5 aufgebracht werden.

Die Erfindung ist nicht auf die dargestellten Ausführungsbeispiele beschränkt, sondern umfaßt alle Varianten und Modifikationen, die in den Rahmen der angeschlossenen Ansprüche fallen.

## Patentansprüche

1. Verfahren zur Herstellung eines Mehrkammertanks (1) für Betriebsmittel von Kraftfahrzeugen, der mindestens eine innenbeschichtete erste (2) und mindestens eine innenbeschichtungslose zweite Kammer (3) hat, mit den Schritten:
Zurverfügungstellen eines ersten Tanksegments (4) aus Metall, welches die erste Kammer (2) enthält und einen außenseitig vorstehenden Umfangskragen (8) aufweist,
Rotolining des ersten Tanksegments (4) zwecks Innenbeschichtens der ersten Kammer (2) mit Kunststoff (13), und
Verbinden eines zweiten Tanksegments (5) aus Metall mit dem Umfangskragen (8), um zwischen dem zweitn Tanksegment (5), dem Umfangskragen (8) und der Außenseite (7) des ersten Tanksegments (4) die zweite Kammer (3) zu bilden,
**dadurch gekennzeichnet,**
**daß** das erste Tanksegment (4) während des Rotolinings an seinem Umfangskragen (8) gehalten wird.

2. Verfahren nach Anspruch 1, **dadurch gekennzeichnet, daß** das erste Tanksegment (4) während des Rotolinings an einer Stelle (11) des Umfangskragens (8) gehalten wird, welche beim anschließenden Verbinden vom zweiten Tanksegment (5) überdeckt wird.

3. Verfahren nach Anspruch 2, **dadurch gekennzeichnet, daß** die genannte Stelle ein Schweißfalz (11) des Umfangskragens (8) ist.

4. Verfahren nach Anspruch 3, **dadurch gekennzeichnet, daß** der Schweißfalz (11) vom umgebogenen Rand einer Trennwand (7) gebildet wird, welche die erste Kammer (2) in Richtung zur zweiten Kammer (3) abschließt.

5. Verfahren nach einem der Ansprüche 1 bis 4, **gekennzeichnet durch** die weiteren Schritte des Auftragens einer Schutzschicht (29) auf die Außenseite des ersten Tanksegments (4) vor dem Rotolining und des Entfernens der Schutzschicht (29) nach dem Rotolining.

6. Verfahren nach einem der Ansprüche 1 bis 5, **dadurch gekennzeichnet, daß** das erste Tanksegment (4) während des Rotolinings zusätzlich auf seiner Außenseite abgestützt wird, bevorzug punktuell oder großflächig-elastisch.

## Claims

1. Method for producing a multi-chamber tank (1) for motor vehicle operating media, said tank having at least one internally-coated first chamber (2) and at least one internal-coating-free second chamber (3), and said method comprising the following steps:
providing a first metal tank segment (4), said segment containing the first chamber (2) and an externally protruding peripheral collar (8),
rotolining the first tank segment (4) in order to internally coat the first chamber (2) with plastics material (13), and
connecting a second metal tank segment (5) to the peripheral collar (8) to form the second chamber (3) between the second tank segment (5), the peripheral collar (8) and the outer face (7) of the first tank segment (4),
**characterised in that** the first tank segment (4) is retained via its peripheral collar (8) during rotolining.

2. Method according to claim 1, **characterised in that** the first tank segment (4) is retained during rotolining at a point (11) on the peripheral collar (8) which is covered by the second tank segment (5) during the subsequent connection.

3. Method according to claim 2, **characterised in that** said point is a welding fold (11) of the peripheral collar (8).

4. Method according to claim 3, **characterised in that** the welding fold (11) is formed by the folded edge of a partition wall (7) which terminates the first chamber (2) toward the second chamber (3).

5. Method according to any one of claims 1 to 4, **characterised by** the further steps of applying a protective layer (29) to the outer face of the first tank segment (4) before rotolining and removing the protective layer (29) after rotolining.

6. Method according to any one of claims 1 to 5, **characterised in that** the first tank segment (4) is additionally supported on its outer face during rotolining, preferably at selected points or resiliently over a large area.

## Revendications

1. Procédé pour la fabrication d'un réservoir à plusieurs compartiments (1) pour des produits servant au fonctionnement de véhicules automobiles, lequel comprend au moins un premier compartiment (2) doté d'un revêtement intérieur et au moins un second compartiment (3) dépourvu de revêtement intérieur, présentant les étapes suivantes :
mise à disposition d'un premier segment de réservoir (4) en métal, qui contient le premier compartiment (2) et une collerette périphérique (8) en dépassement vers l'extérieur,
revêtement rotatif du premier segment de réservoir (4) dans le but de revêtir l'intérieur du premier compartiment (2) avec une matière plastique (13), et
liaison d'un second segment de réservoir (5) en métal avec la collerette périphérique (8), afin de former le second compartiment (3) entre le second segment de réservoir (5), la collerette périphérique (8) et la face extérieure (7) du premier segment de réservoir (4),
**caractérisé en ce que**
le premier segment de réservoir (4) est tenu au niveau de sa collerette périphérique (8) pendant le revêtement rotatif.

2. Procédé selon la revendication 1, **caractérisé en ce que** le premier segment de réservoir (4) est tenu, pendant le revêtement rotatif, à un emplacement (11) de la collerette périphérique (8) qui est recouvert lors de la liaison successive du second segment de réservoir (5).

3. Procédé selon la revendication 2, **caractérisé en ce que** l'emplacement précité est un repli de soudage (11) de la collerette périphérique (8).

4. Procédé selon la revendication 3, **caractérisé en ce que** le repli de soudage (11) est formé par la bordure rabattue d'une paroi de séparation (7), laquelle obture le premier compartiment (2) en direction du second compartiment (3).

5. Procédé selon l'une des revendications 1 à 4, **caractérisé en outre par** les étapes consistant à appliquer une couche protectrice (29) sur la face extérieure du premier segment de réservoir (4) avant le revêtement rotatif et à supprimer la couche protectrice (29) après le revêtement rotatif.

6. Procédé selon l'une des revendications 1 à 5, **caractérisé en ce que** le premier segment de réservoir (4) est soutenu pendant le revêtement rotatif en supplément sur sa face extérieure, de préférence de manière ponctuelle ou de manière élastique sur une grande surface.
